# EUROPÄISCHE PATENTANMELDUNG

(11) **EP 0 853 112 A1**
(43) Veröffentlichungstag der Anmeldung: **15.07.1998**
(21) Anmeldenummer: 98100302.3
(22) Anmeldetag: 09.01.1998
(51) Int. Cl.: C09K 11/02, F21K 2/00

(54) **Leuchtfähige Substanz**

(30) Priorität: 09.01.1997 DE 19700310
(71) Anmelder: Permalight Leuchtfarben AG, 30966 Hemmingen, OT Arnum (DE)
(72) Erfinder: Beckmann, Werner, 31832 Springe-Bennigsen (DE)
(74) Vertreter: Eikenberg, Kurt-Rudolf, Dr. Dipl.-Chem.

(57) **Zusammenfassung**

Beschrieben wird eine leuchtfähige Substanz, die im wesentlichen aus einem plastisch verformbaren, transparenten und bei Raumtemperatur aushärtenden Siliconmaterial und einem dem Siliconmaterial zugesetzten leuchtfähigen Pigmentmaterial besteht. Bevorzugt umfassen dabei das Siliconmaterial einen Siliconkautschuk und das leuchtfähige Pigmentmaterial Leuchtpigmente.

Die leuchtfähige Substanz kann sehr vorteilhaft bei der Herstellung von Leuchtelementen vor Ort, z.B. durch Ausspritzen aus einer Kartusche verwendet werden. Auch eine Integration eines leuchtfähigen Warn- oder Hinweiselements in eine Fläche, z.B. in Fußböden, Treppen, Wände oder Decken ist möglich, indem in der Fläche eine Ausnehmung vorgesehen und diese Ausnehmung mit leuchtfähiger Substanz ausgefüllt wird.

## Beschreibung

Leuchtfähige Substanzen werden häufig zur besseren Kenntlichmachung von Hinweisen, zum Warnen vor Gefahrenquellen o.dgl. in der Dunkelheit eingesetzt. Im Rahmen der vorliegenden Beschreibung soll der Begriff "leuchtfähig" im weitesten Sinne verstanden werden, er soll dabei auch Begriffe wie "lumineszierend", "selbstleuchtend", "nachleuchtend", "phosphoreszierend" o.dgl. umfassen.

Es war die primäre Aufgabe der vorliegenden Erfindung, eine leuchtfähige Substanz anzugeben, die vielseitig einsetzbar, hochstrapazierfähig und auf einfache Weise - beispielsweise durch Verspritzen aus einer handelsüblichen Kartusche - am gewünschten Ort anbringbar ist. Die leuchtfähige Substanz sollte insbesondere eine (a) im nicht ausgehärteten Zustand (z.B. bei Abwesenheit von Feuchtigkeit) plastisch verformbare und (b) unter Atmosphärenbedingungen bei Raumtemperatur zu einem Elastomeren (d.h. zu einem leuchtfähigen Silicon-Gummi) aushärtbare Masse sein.

Diese primäre Aufgabe wird erfindungsgemäß gelöst durch eine plastisch verformbare, bei Raumtemperatur unter Atmosphärenbedingungen aushärtbare leuchtfähige Substanz, die im wesentlichen aus einem transparenten Siliconmaterial und einem dem Siliconmaterial zugesetzten leuchtfähigen Pigmentmaterial besteht.

Der Begriff "Silicone" umfaßt insbesondere Polymerisationsprodukte von Organosiloxanen (d.h. Polyorganosiloxane).

Vorzugsweise handelt es sich bei dem Siliconmaterial um einen kalthärtenden Einkomponenten-Silikonkautschuk (RTV-1-Kautschuk).

Aus oder mit einer erfindungsgemäßen leuchtfähigen Substanz lassen sich Elemente, die eine Warn- oder Hinweisfunktion erfüllen können, vor Ort herstellen. Derartige Warn- oder Hinweiselemente sind neben der leuchtfähigen Substanz selbst ein weiterer Gegenstand der vorliegenden Erfindung.

Ein Warn- oder Hinweiseffekt kann auf vielerlei Weise erreicht werden. Beispielsweise ist es möglich, die erfindungsgemäße leuchtfähige Substanz schnurförmig auf Sockelleisten an oder auf Metalltreppenkanten anzubringen und dort aushärten zu lassen, beispielsweise indem man diese aus einer entsprechend gefüllten Kartusche herausspritzt (extrudiert), die in eine handelsübliche Schalenpistole o. dgl. eingesetzt ist. Der Fachmann wird die Viskosität der leuchtfähigen Substanz in diesem Fall auf übliche Weise so einstellen, daß eine einfache Spritz-Verarbeitung bei Raumtemperatur möglich ist. Diese Verarbeitung muß sich dann in nichts von der Verarbeitung handelsüblicher Silicon-Dichtstoffe unterscheiden.

Die leuchtfähigen Warn- oder Hinweiselemente lassen sich auch nachträglich in bestehende Flächen integrieren, beispielsweise in Wände, Decken, Fußböden, Treppen u.dgl. Zu diesem Zweck wird in der bestehenden Fläche eine Ausnehmung vorgesehen, beispielsweise eingefräst, und diese Ausnehmung wird dann mit der erfindungsgemäßen leuchtfähigen Substanz ausgefüllt. Ein derartiges Verfahren zur nachträglichen Integration eines leuchtfähigen Warn-oder Hinweiselements gehört ebenfalls zum Gegenstand der vorliegenden Erfindung.

Das leuchtfähige Pigmentmaterial umfaßt vorzugsweise Leuchtpigmente, beispielsweise sogenannte "erdgebundene" (z.B. Metalle aus der Gruppe der Erdalkalien, Erdmetalle oder Seltenen Erden enthaltende) Leuchtpigmente oder solche auf der Basis von Kupfer-dotiertem Zinksulfid, die durch sichtbares Licht angeregt werden und nach Abschalten der anregenden Lichtquelle längere Zeit nachleuchten, also starke Phosphoreszenz zeigen.

Völlig unerwartet hat sich im Rahmen der Erfindung ergeben, daß es möglich ist, den chemisch besonders anspruchsvollen und sensiblen Siliconmaterialien aus der Gruppe der (gleichzeitig) transparenten, bei Raumtemperatur plastisch verformbaren und unter Atmosphärenbedingungen bei Raumtemperatur aushärtbaren Einkomponenten-Siliconkautschuke Leuchtpigmente zuzusetzen, ohne deren Eigenschaften wesentlich zu beeinträchtigen. Eine so erhaltene leuchtfähige Substanz ist als solche nicht mehr transparent, weist aber den besonderen Vorteil auf, daß sie gewissermaßen von innen leuchtet und daher besonders hell erscheint, da auch tiefer innen liegende Leuchtpigmente zur Helligkeit beitragen. Mit plastisch verformbaren, aber nicht transparenten Silikonmaterialien, wie sie beispielsweise zum Spritzen von Silikondichtungen üblich sind, läßt sich durch Zugabe von Leuchtpigmenten keine derartig hohe Leuchtkraft erzielen, da dann nur die oberflächennahen Leuchtstoffpigmente zur Leuchtfähigkeit der Substanz beitragen. Dementsprechend wurden Leuchtpigmente bisher nicht in die üblichen plastisch verformbaren und nicht transparenten Silikonmaterialien eingebracht. Es ist das Verdienst der Erfindung, erkannt zu haben, daß die transparenten plastischen Silikonmaterialien, die ja für einen ganz anderen Zweck entwickelt worden sind, hervorragend als Basis für eine Leuchtsubstanz geeignet sind, mit der Leuchtelemente vor Ort "gespritzt" werden können. Damit ist es der Erfindung gelungen, eine bisher bestehende Bedarfslücke zu schließen.

Die erfindungsgemäße Substanz besitzt bereits in geringen Schichtdicken (ab etwa 100 µm) gute Nachleuchteigenschaften, die in größeren Schichtdicken (vorzugsweise größer 1000 µm) noch besser werden.

Es ist möglich, die erfindungsgemäße Substanz so einzustellen, daß sie besonders abrieb- und reinigungsmittelbeständig wird; in diesem Fall behalten die im Fußbodenbereich angebrachten erfindungsgemäßen Warn- oder Hinweiselemente auch bei hoher Belastung jahrelang ihre hohe Leuchtkraft. Zusätze, die die Haftung des ausgehärteten Silicongummis verbessern sollen, können in der erfindungsgemäßen Substanz ebenso enthalten sein wie Härtungskatalysatoren und Füllstoffe. Es ist klar, daß die Füllstoffe dann an die erwünschten Eigenschaften des Produkts (Transparenz, Leuchten von innen) angepaßt sein müssen.

Plastisch verformbare Siliconmaterialien enthalten Füllstoffe zur Beeinflussung des mechanischen Verhaltens, insbesondere zur Einstellung der gewünschten Plastizität. Es sind Füllstoffe bekannt, die dem Material eine erwünschte Transparenz verleihen, die aber sehr aufwendig sind. Gemäß einer bevorzugten Weiterbildung der Erfindung enthält die erfindungsgemäße leuchtfähige Substanz neben den oder - zumindest partiell - anstelle solcher Füllstoffe Leuchtpigmente als Füllstoff. Alternativ ist es aber auch möglich, die Füllstoffe des Silicons durch Versetzen mit Leuchtpigmenten selbst in leuchtende Füllstoffe zu überführen, weitgehend entsprechend der bekannten Färbung von Füllstoffen durch anorganische Pigmente.

Bei den angegebenen Methoden wird typischerweise zur Herstellung einer erfindungsgemäßen leuchtfähigen Substanz ein beispielsweise flüssiges oder pastöses Silicon mit einem Leuchtpigmente umfassenden Füllstoffmaterial vermischt, wobei eine vorzeitige Aushärtung auf übliche Weise unterbunden wird.

Verfahren zur Herstellung und Weiterverarbeitung von Siliconmaterialien aus der Gruppe der (gleichzeitig) transparenten, bei Raumtemperatur plastisch verformbaren und unter Atmosphärenbedingungen bei Raumtemperatur aushärtbaren Einkomponenten-Siliconkautschuke sind dem Fachmann geläufig.

Weitere Ausgestaltungen der vorliegenden Erfindung sind den nachfolgenden Ansprüchen zu entnehmen.

## Patentansprüche

1. Plastisch verformbare, bei Raumtemperatur unter Atmosphärenbedingungen aushärtbare leuchtfähige Substanz, die im wesentlichen aus einem transparenten Siliconmaterial und einem dem Siliconmaterial zugesetzten leuchtfähigen Pigmentmaterial besteht.

2. Leuchtfähige Substanz nach Anspruch 1, dadurch gekennzeichnet, daß das Siliconmaterial einen plastisch verformbaren, bei Raumtemperatur unter Atmosphärenbedingungen aushärtbaren und transparenten Einkomponenten-Siliconkautschuk umfaßt.

3. Leuchtfähige Substanz nach Anspruch 1 oder 2, dadurch gekennzeichnet, daß das leuchtfähige Pigmentmaterial Leuchtpigmente umfaßt.

4. Leuchtfähige Substanz nach einem der vorhergehenden Ansprüche, dadurch gekennzeichnet, daß sie in einer Schichtdicke oberhalb 1000 µm, vorzugsweise 100 um undurchsichtig ist.

5. Leuchtfähige Substanz nach einem der vorhergehenden Ansprüche, dadurch gekennzeichnet, daß das Siliconmaterial zur Beeinflussung ihres mechanischen Verhaltens Leuchtpigmente als Füllstoff enthält.

6. Leuchtfähige Substanz nach einem der Ansprüche 1 - 4, dadurch gekennzeichnet, daß das Siliconmaterial einen Füllstoff enthält, der aufgrund eingearbeiteter und/oder oberflächlich anhaftender Leuchtpigmente leuchtfähig ist.

7. Warn- oder Hinweiselement, umfassend eine leuchtfähige Substanz nach einem der Ansprüche 1 - 6.

8. Verwendung eines transparenten Siliconmaterials zur Herstellung einer leuchtfähigen Substanz nach einem der Ansprüche 1 - 6.

9. Verfahren zur nachträglichen Integration eines leuchtfähigen Warn-oder Hinweiselements in eine Fläche, z.B. in Fußböden, Treppen, Wände oder Decken dadurch gekennzeichnet, daß
- in der Fläche eine Ausnehmung vorgesehen wird und
- diese Ausnehmung mit leuchtfähiger Substanz ausgefüllt (ausgespritzt) wird.

10. Verfahren zur Herstellung einer leuchtfähigen Substanz nach einem der Ansprüche 1 - 6, dadurch gekennzeichnet, daß ein flüssiger Siliconkautschuk mit einem Leuchtpigmente umfassenden Füllstoffmaterial vermischt wird.
